(19) **Europäisches Patentamt / European Patent Office / Office européen des brevets**

(11) **EP 4 206 732 A1**

(12) # EUROPEAN PATENT APPLICATION

(43) Date of publication:
**05.07.2023 Bulletin 2023/27**

(21) Application number: **21218355.2**

(22) Date of filing: **30.12.2021**

(51) International Patent Classification (IPC):
**G01S 15/96** (2006.01)   **A01K 97/00** (2006.01)
**A01K 97/02** (2006.01)   **G01S 15/36** (2006.01)

(52) Cooperative Patent Classification (CPC):
**A01K 97/00; A01K 97/02; G01S 7/536;
G01S 15/36; G01S 15/8902; G01S 15/96**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2021 SE 2151629
28.12.2021 SE 2151630**

(71) Applicant: **UAB Deeper
10312 Vilnius (LT)**

(72) Inventors:
• **Spelveris, Mindaugas
10312 Vilnius (LT)**
• **elvys, Vytautas
10312 Vilnius (LT)**

(74) Representative: **Zacco Sweden AB
P.O. Box 5581
Löjtnantsgatan 21
114 85 Stockholm (SE)**

(54) **SCANNING A BODY OF WATER WITH A FISHING SONAR APPARATUS**

(57)    The present disclosure relates to a method (300) for scanning a body of water (5), a fishing sonar apparatus (2), a computer program carrier and a vessel (1) comprising the fishing sonar apparatus. The method comprises emitting (301), by means of a fishing sonar module (3) comprised in the fishing sonar apparatus, a phase-modulated impulse sonar signal (101) having a first frequency into the body of water and receiving (303) a reflected phase-modulated impulse sonar signal (103) from the body of water. The received reflected sonar signal comprises a reflection of the emitted sonar signal being incident on at least one first object (25a, 26a, 27) surrounded by the body of water. The method further comprises determining (305) a correlated signal between the reflected phase-modulated impulse sonar signal and a reference signal at least partly constructed based on the reflected phase-modulated impulse sonar signal. The correlated signal is a phase-correlated signal determined based on a phase difference of the reflected sonar signal and the reference signal. Further, the method comprises obtaining (309) at least one object-related information associated with the at least one first object surrounded by the body of water based on the phase-correlated signal.

FIG. 1

**(Cont. next page)**

EP 4 206 732 A1

FIG. 3

## Description

TECHNICAL FIELD

The present disclosure relates to scanning a body of water for localization of fish. In particular, embodiments herein relate to a method and a fishing sonar apparatus, as well as a vessel comprising such a fishing sonar apparatus and a computer program carrier.

BACKGROUND

The recent surge in development of sonar devices for fishing applications has been an indicative of popularity and practicality of using such devices to increase the fishing yield and success rate of fishing expeditions. To this end, castable fishing sonar devices have been developed. Additionally, boats or vessels have been equipped with fishing sonar scanners for fishfinding, capable of scanning underwater locations and illustrating a map of the underwater world with various resolutions. Sonar devices are operated by employing ultra-sound signals usually generated by a transducer and by measuring ultra-sound signals, reflected from obstacles within the water.

One of the most common technologies used in generation of sonar scans for fish-finding is using transducers to create compressed high intensity radar pulses (CHIRP) as e.g. explained in US20170023676A1 for applications such as identifying the presence of fish, various other aquatic life, and underwater structures.

In some sonar systems, e.g. as in a monotonic sonar, the frequency of the sonar signal remains constant over duration of the pulse. In more advanced sonar systems, such as a CHIRP sonar, the frequency through the duration of the transmission sonar pulse may be changed using various CHIRP techniques. When it comes to identification of objects underwater, the duration of the sonar pulse is considered an important parameter. Shorter pulses usually give better precision over a long range and can be used to detect closely-spaced objects more accurately (high range resolution). However, this requires generation of pulses with very high peak powers. By using longer pulses, the accuracy in range resolution and target separation degrades, even though less peak powers are required. Using CHIRP sonars, have shown to provide improvements in range resolution and in background noise rejection. However, the outcome of comparing the actual reflected signals and the transmitted pulses often used in CHIRP techniques is often accompanied by many large sidelobes, making these techniques still suffer from poor object separation and signal-to-noise ratios.

Therefore, there is a need in the field of sonar systems for fishing applications to develop more flexible, cost-effective, versatile and accurate sonar systems and methods with improved range resolution and object separation.

SUMMARY

It is therefore an object of the present disclosure to provide a fishing sonar apparatus for scanning a body of water for localization of fish, a vessel comprising such a fishing sonar apparatus, a method and a computer program carrier, which alleviate all or at least some of the drawbacks of the presently known solutions. These and other objects are achieved by various aspects of the present disclosure as defined in the appended independent claims. The term exemplary or example is in the present context to be understood as serving as an instance, example or illustration.

According to a first aspect, there is provided a method performed by a fishing sonar apparatus for scanning a body of water. The method comprises emitting, by means of a fishing sonar module comprised in the fishing sonar apparatus, a phase-modulated impulse sonar signal having a first frequency into the body of water and receiving a reflected phase-modulated impulse sonar signal from the body of water. The received reflected sonar signal comprises a reflection of the emitted sonar signal being incident on at least one first object surrounded by the body of water. The method further comprises determining a correlated signal between the reflected phase-modulated impulse sonar signal and a reference signal at least partly constructed based on the reflected phase-modulated impulse sonar signal. The correlated signal is a phase-correlated signal determined based on a phase difference of the reflected sonar signal and the reference signal. Further, the method comprises obtaining at least one object-related information associated with the at least one first object surrounded by the body of water based on the phase-correlated signal. According to several embodiments, the phase-correlated signal may be a phase-only correlated (POC) signal.

According to the presented method, by employing phase-correlated signal processing techniques and more specifically a POC signal processing being applied to the received reflected phase-modulated impulse sonar signal from the body of water, wherein the reflected signal comprises reflection of the emitted sonar signal from on at least one underwater object surrounded by the body of water, several advantageous effects are achieved. The inventors have realized that using POC in phase-modulated sonar signals reflected from fish or other underwater objects not only creates fewer and reduced sidelobes, but also the simpler waveform of POC provides an advantage of identifying the main narrow peaks in the phase-correlated signals individually and distinctively. Even further, by using POC, range resolution, object-separation and SNR are substantially improved. Accordingly, by the advantageous method detailed object-related information can be obtained, which provides considerably improved possibilities for localization of fish. The distances between the sonar module from different fish, or schools of fish can be determined with enhanced accuracy. Further, individual fish can be identified and accurate separation between individual fish e.g. between a first fish and a second fish among a school of fish can also be determined. Accordingly, valuable insight for planning and decision-making regarding fishing activities and localization of fish by the fishing vessel can be achieved.

In several embodiments, the received reflected sonar signal may further comprise a reflection of the emitted sonar signal being incident on at least one second object surrounded by the body of water. Accordingly, the method may further comprise obtaining at least one object-related information associated with the at least one second object surrounded by the body of water based on the phase-correlated signal.

The advantageous method may thus be used to resolve object-related information related to the at least one first underwater object, the at least one second underwater object and/or the relative object-related information between the at least one first and second objects.

In several embodiments the at least one object-related information associated with the at least one first and/or second objects may comprise at least one of a distance of the at least one first and/or second object from the fishing sonar module, a distance of the at least one first object from the at least one second object (i.e. a relative distances between the at least one first and second objects), and a hardness characteristics of the at least one first and/or second object.

In various embodiments, the obtaining at least one object-related information associated with the at least one first object and/or at least one second object may further comprise determining a time-of-flight of the phase-correlated reflected sonar signal. Thus, the step of obtaining may accordingly comprise calculating a distance of the at least one first object and/or the at least one second object from the sonar module based on the determined time-of-flight of the phase-correlated reflected sonar signal. This has an advantage that by applying the phase-correlated signal processing of the presented method, distances from the sonar module to the at least one first and/or the at least one second objects as well as their relative distances can be determined much more accurately.

In several embodiments, the obtaining at least one object-related information associated with the at least one first object and/or at least one second object may further comprise extracting an envelope of the reflected sonar signal and multiplying the extracted envelope of the reflected sonar signal with the phase-correlated signal. The method may accordingly further comprise determining the hardness characteristics of the at least one first object and/or at least one second object based on the multiplied signal. Once again, by processing the phase-modulated reflected sonar signal by the advantageous method, the type of the underwater objects including their hardness can be identified much more accurately.

In various embodiments, the reference signal may be at least one of a predetermined reference signal, a reference signal constructed based on a reflected phase-modulated impulse sonar signal generated under a test operation condition of the fishing sonar module and the fishing sonar apparatus in a test chamber, and a reference signal constructed based on a reflected phase-modulated impulse sonar signal generated under real-life operation condition of the fishing sonar module and the fishing sonar apparatus.

In several embodiments, the at least one first and/or second objects may comprise at least one of a fish among a school of fish, and sea vegetation and a bottom part of a sea and/or a lake (i.e. bed of a pool of water).

According to a second aspect of the present disclosure there is provided a computer program carrier carrying one or more computer programs configured to be executed by one or more processors of a processing system comprised in a control unit, the one or more programs comprising instructions for performing the method according to any one of the embodiments of the method disclosed herein. Wherein the computer program carrier is one of an electronic signal, optical signal, radio signal or a (non-transitory) computer-readable storage medium.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present disclosure, there is provided a computer program product comprising instructions which, when the program is executed by one or more processors of a processing system comprised in a control unit, causes the processing system to carry out the method according to any one of the embodiments of the method disclosed herein.

According to a further fourth aspect, there is provided a fishing sonar apparatus for scanning a body of water by a fishing sonar module comprised in the fishing sonar apparatus. The fishing sonar apparatus comprises a control unit configured to emit, by means of the fishing sonar module, a phase-modulated impulse sonar signal having a first frequency into the body of water. The control unit is further configured to receive a reflected phase-modulated impulse sonar signal from the body of water, wherein the received reflected sonar signal comprises a reflection of the emitted sonar signal being incident on at least one first object surrounded by the body of water. Further, the control unit is configured to determine a correlated signal between the reflected phase-modulated impulse sonar signal and a reference signal at least partly constructed based on the reflected phase-modulated impulse sonar signal, wherein the correlated signal is a phase-correlated signal determined based on a phase difference of the reflected sonar signal and the reference signal. The control unit is further configured to obtain at least one object-related information associated with the at least one first object surrounded by the body of water based on the phase-correlated signal.

In several embodiments, the fishing sonar apparatus may be comprised in a castable enclosure. This way the advantageous method and fishing sonar apparatus are implemented in a portable and castable sonar device which may be used for scanning a body of water without the need for a vessel.

According to yet another fifth aspect of the present disclosure, there is provided a vessel comprising a fishing sonar module configured to perform at least one sonar scan of a body of water. The vessel further comprises a perception system for monitoring a surrounding environment of the vessel such as the body of water. The vessel further comprises a localization system configured to monitor a geographical position and heading of the vessel. The vessel further comprises a fishing sonar apparatus according to the fourth aspect and various embodiments of the fourth aspect.

Further embodiments of the different aspects are defined in the dependent claims.

It is to be noted that all the embodiments, elements, features and advantages associated with the first aspect also analogously apply to the second, third, fourth and the fifth aspects of the present disclosure.

These and other features and advantages of the present disclosure will in the following be further clarified in the following detailed description.

BRIEF DESCRIPTION OF THE DRAWINGS

Further objects, features and advantages of embodiments of the disclosure will appear from the following detailed description, reference being made to the accompanying drawings. The drawings are not to scale.

Fig. 1 shows a schematic side view of a pool of water and a vessel configured to scan a body of water in accordance with some embodiments;

Fig. 2 shows a schematic diagram of a phase-modulated sonar signal in accordance with various embodiments;

Fig. 3 shows a schematic flow chart illustrating a method in accordance with several embodiments;

Fig. 4 shows a schematic block diagram of signal processing of a phase-modulated signal in accordance with several embodiments;

Figs. 5a-5c show diagrams of a phase-modulated signal in accordance with several embodiments;

Figs. 5d-5f show diagrams of a phase-correlated signal in accordance with several embodiments;

Fig. 5g shows a sonar image of the body of water in accordance with several embodiments;

Fig. 6 shows a schematic side view illustration of the vessel comprising a control unit in accordance with various embodiments.

DETAILED DESCRIPTION

In the following detailed description, some of the embodiments of the present disclosure will be described. However, those skilled in the art will appreciate that features of different embodiments are exchangeable among the embodiments and may be combined in various other ways, unless anything else is specifically indicated. The basics and conventional techniques in electronics, sensor systems, signal processing, data communication systems, telecommunication systems, and other components to carry out the disclosure are considered to be readily available to the person skilled in the art. The terms "first", "second" and the like as used herein, do not denote any order, quantity or importance, but rather are used to distinguish one element from another.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

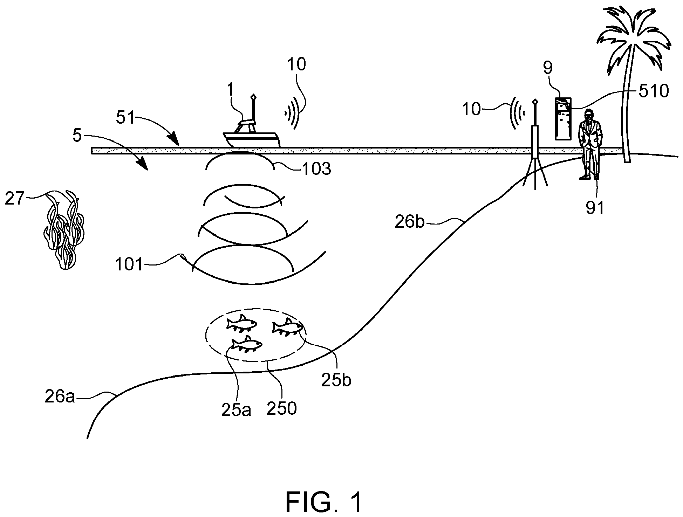

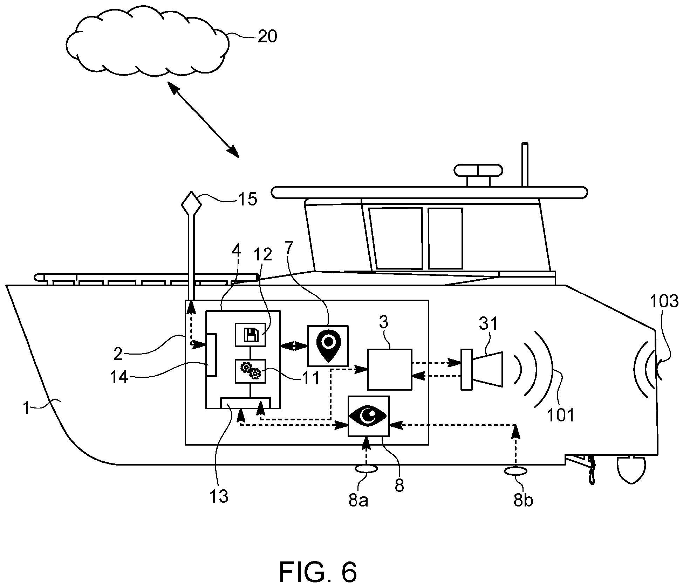

Fig. 1 shows a schematic drawing of a vessel 1 according to several embodiments and aspects. The vessel 1 comprises a fishing sonar apparatus 2 comprising a control unit 4 as illustrated and explained with reference to Fig. 6. The vessel 1 within the boundaries of the present disclosure is to be construed as any kind of watercraft suitable for and used for catching fish, such a boat, a fishing boat, sailboat, yacht, canoe, kayak, any kind of inflatable boat, belly-boats, non-powered or low-powered boats, etc. The vessel according to several embodiments maybe a remotely controlled vessel by a user 91 by means of a wireless device 9 and by wireless communication signals 10. The vessel 1, in several embodiments may additionally or alternatively be a semi or fully autonomous vessel.

The fishing sonar apparatus 2 of the vessel 1 is configured for scanning a body of water 5. The fishing sonar apparatus is configured for localization of fish 25a, 25b in the body of water. By water, it is meant any one of fresh water or any aquatic environment such as seawater, ocean water, lake water, river water etc. that could be the habitat for aquatic life. By fish in the context of the present disclosure, it is meant any of numerous cold-blooded aquatic craniate vertebrates including the bony fishes.

According to several embodiments and aspects, the fishing sonar apparatus 2 comprises an integrated sonar module 3 as shown in Fig. 6 configured to perform at least one sonar scan in the body of water.

The inventors have realized that one approach for identification of objects such as fish 25a, 25b underwater with high precision is to manipulate the phase of the sonar pulses such that the demands on generating sonar pulses with shorter durations are alleviated.

As mentioned earlier, the sonar pulses with shorter duration give better precision over a long range and can be used to detect closely-spaced underwater objects more accurately which contributes to improved range resolution and object separation. However, generating these pulses requires that the pulses should have very high peak powers e.g. in the order of 1 kW.

Another aspect to consider is the achievable signal-to-noise ratio (SNR) for the received sonar pulses reflected form the objects. In general, the greater the energy of the transmitted pulses (i.e. pulses emitted to the body of water), the greater the SNR is for the resulting received reflected pulses. However, by decreasing the duration of the transmitted pulses, SNR is also reduced.

Pulse compression techniques enable sonar systems to achieve finer range resolution without sacrificing SNR. To achieve this goal, the pulses may be frequency-modulated across a relatively long pulse extent or length. Both linear and non-linear frequency modulation may be used to achieve pulse compression. This is what is typically used when generating CHIRP pulses. However, achieving efficient pulse compression in CHIRP pulse generation offering high precision object separation as well as having improved SNR still remains a challenge.

Accordingly, the inventors have realized that to overcome these issues pulses with longer duration can be generated, however, the phase of the signal over the duration of the pulses can be varied. In other words, a sonar signal having e.g. a sinusoidal waveform can be used where phase-modulation is applied to the phase of the signals, while keeping the frequency and amplitude of the signals constant.

The term modulated signal may in this context mean a signal that has one or more of its characteristics i.e. phase, set or changed in such a manner as to encode information in the signal.

Phase-modulated signals can also be used to achieve pulse compression. In a pulse compression sonar systems, the sonar receiver correlates a replica pulse, sometimes referred to as reference signal or template, with the received reflected pulse. The shape of the template is related to the shape of the transmitted sonar signal and can also be constructed based on the shape of the received reflected signal. The pulse compression of a phase-modulated signal is a process of correlation, especially of autocorrelation. In other words, the shape of the reference signal is compared with the shape of the received reflected signal, i.e. with itself. The resulting detection peaks of the compressed signal are much narrower than the original pulse length.

By modulating the phase of the sonar signals instead of frequency and using pulse compression techniques, longer pulses can be used for transmission i.e. lower peak amplitudes, while achieving the same results as with shorter pulses i.e. enhanced range resolution and high-precision object separation.

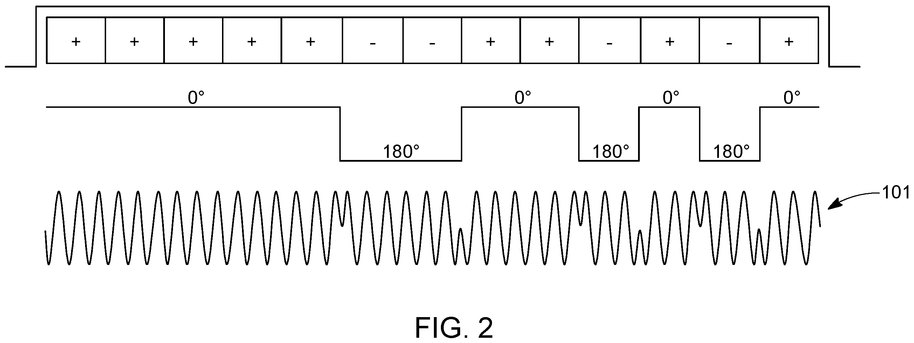

Fig. 2 shows a Barker code phase-modulation approach to modulate the phase of the sonar signal 101 to be emitted to the body of water 5. It should be clear to the skilled person that other phase-modulation approaches may be used for modulation of the pulses. The Barker code in this example is implemented by splitting the pulses of the same frequency in identical width sub-ranges. Each sub-range is assigned either 0 degrees or 180 degrees phase shift. The pluses (+) correspond to 0 degrees and the minuses (-) to the 180 degrees phase shift. Further details of phase-modulation by using Barker code will be avoided herein for the sake of brevity.

The fishing sonar module 3, is configured to generate an impulse signal 101 having a first frequency and phase-modulated with Barker code, to be emitted to the body of water. This signal is then emitted, by means of the emitter transducer 31 of the fishing sonar module 3 into the body of water. The transducer 31 of the sonar module 3 is further configured to receive a reflected phase-modulated impulse sonar signal 103 from the body of water. In this example, the received reflected sonar signal comprises a reflection of the emitted sonar signal being incident on at least one first object such as fishes 25a surrounded by the body of water. In other words, the reflected sonar signal received by the sonar module 3 is reflected by the at least one fish 25a. In the context of the present disclosure objects may comprise fish 25a, 25b, bottom 26a, 26b of the sea or lake, or underwater vegetation 27, etc. The unprocessed received reflected sonar signal 103 can be converted to a digital signal through common digital signal processing steps which may be implemented in a microcontroller unit (MCU) and at least one digital signal processing (DSP) unit (not shown) of the control unit 4 of the fishing sonar apparatus 2. The control unit 4 is configured to determine a phase-correlated signal between the converted reflected phase-modulated impulse sonar signal and a reference signal. In various embodiments and aspects, the phase-correlated signal is a phase-only correlated (POC) signal. The POC only has information on the phase differences of the signals. For instance if we call "g" the generated or template signal and "h" the reflected signal and inferring that g*h denotes the cross-correlation of functions F[g] and F[h], the Fourier transform of function g and h is written as follows:

$$F[g*h] = F[g]\overline{F[h]},$$

where F[h] denotes the Fourier transform and $\overline{F[h]}$ denotes the complex conjugate of F[h]. The POC of g and h, represented here as g*h, is written in the Fourier domain as follows:

$$F[g \star h] = \frac{F[g]\overline{F[h]}}{\left|F[g]\overline{F[h]}\right|}$$

The POC signal is determined based on a phase difference of the reflected sonar signal and the reference signal calculated by an auto-correlation function between the reflected signal and the reference signal. The outcome of this auto-correlation function may then be filtered and compressed by pulse compression techniques. In several aspects and embodiments, the auto-correlated reflected signal is used to obtain at least one object-related information associated with the at least one first object surrounded by the body of water.

The reference signal or template is at least partly constructed based on the reflected phase-modulated impulse sonar signal. The emitted sonar signal from the sonar module may be distorted by the instruments and other causes such as absorption losses or angles of incidence. Distortion of emitted (or reflected) signals may be due to e.g. degradation of an input signal (i.e. ideal generated sonar waveform) in electroacoustic transduction or viscous and chemical absorption in sea water. Thus, a perfect reference signal cannot be directly sampled from the emitter transducer of the sonar module, but rather it is constructed based on a short window or short template of the reflected sonar signal 103 e.g. a 100-microsecond window of the reflected signal most resembling an undistorted ideal transmission sonar waveform such as a sinusoidal waveform at a chosen frequency. Accordingly, in various aspects and embodiments, the reference signal is at least one of a predetermined reference signal, a reference signal constructed based on a reflected phase-modulated impulse sonar signal generated under a test operation condition of the fishing sonar module and the fishing sonar apparatus in a test chamber (not shown), and a reference signal constructed based on a reflected phase-modulated impulse sonar signal generated under real-life operation condition of the fishing sonar module and fishing sonar apparatus. The predetermined reference signal may thus be a nominal impulse sonar signal generated in a computer simulation environment. The generated reference signals via simulation, in the test lab under controlled test conditions or under runtime of the sonar module may be stored in a memory 12 of the fishing sonar apparatus 2 and retrieved subsequently for POC signal processing.

The inventors have realized that using POC in phase-modulated sonar signals reflected from fish or other underwater objects not only creates fewer and reduced sidelobes, but also the simpler waveform of POC provides the advantage of identifying the main peaks in the phase-correlated signals uniquely. Even further, by using POC, range resolution, object-separation and SNR are substantially improved.

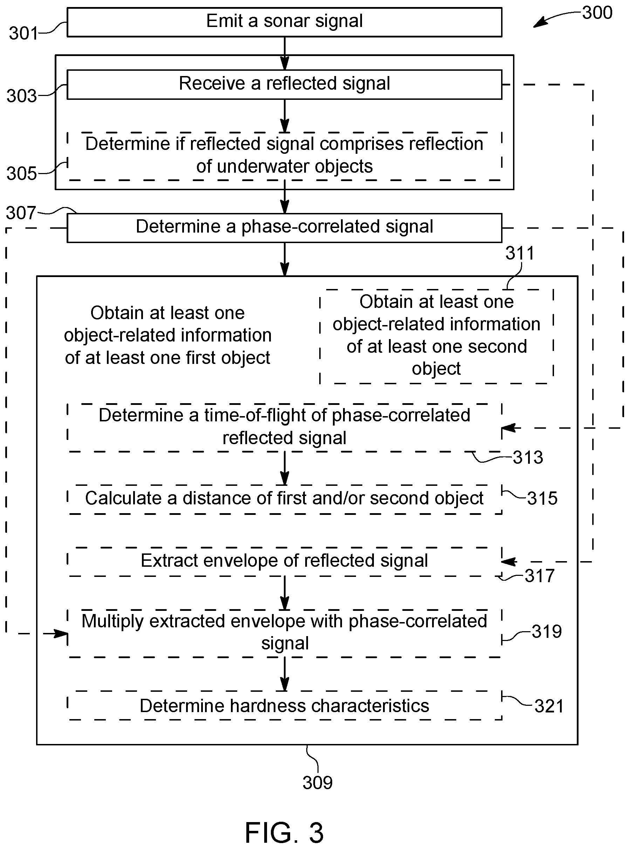

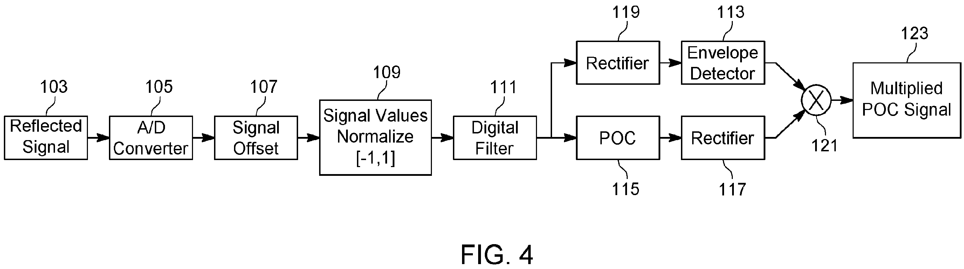

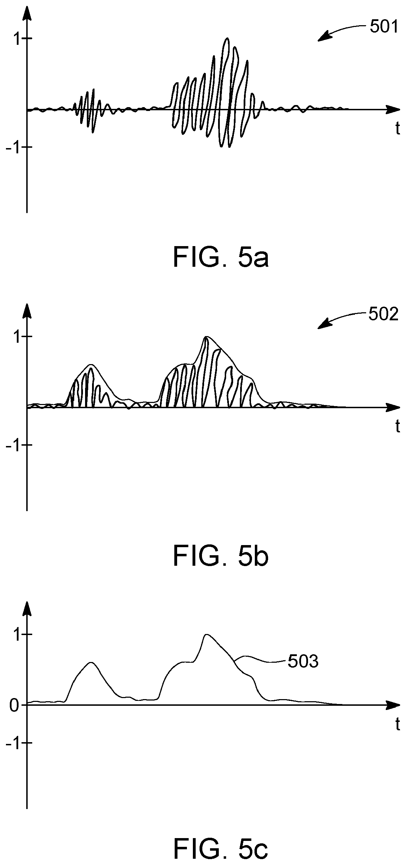

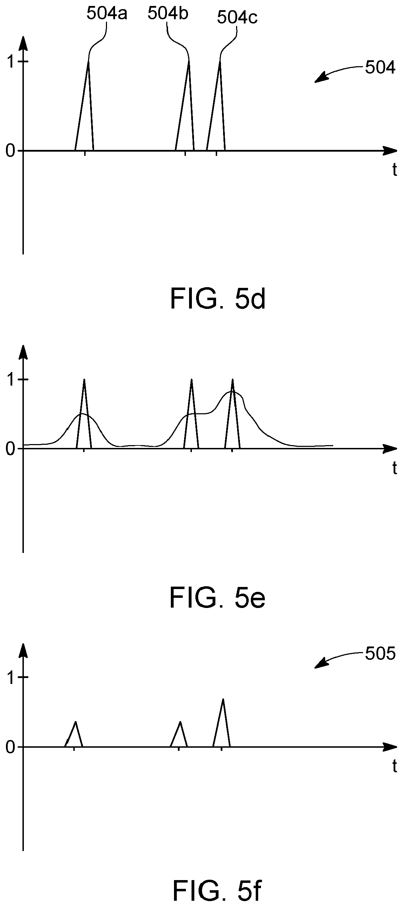

Fig. 3 shows a flowchart of a method 300 according to several aspects and embodiments for scanning a body of water by a fishing sonar apparatus 2. The method comprises emitting 301, by means of a fishing sonar module 3 comprised in the fishing sonar apparatus 2, a phase-modulated impulse sonar signal 101 having a first frequency into the body of water 5. The method further comprises receiving 303 a reflected phase-modulated impulse sonar signal 103 from the body of water 5. The received reflected sonar signal 103 comprises the reflection of the emitted sonar signal being incident on at least one first object 25a, 26a, 27 surrounded by the body of water 5. In some embodiments the method may further comprise determining 305 if the received reflected sonar signal 103 comprises the reflection of the emitted sonar signal which has been incident on the at least one first object 25a, 26a, 27 surrounded by the body of water. The method further comprises 307 determining a correlated signal between the reflected phase-modulated impulse sonar signal 103 and the reference signal at least partly constructed based on the reflected phase-modulated impulse sonar signal 103, wherein the correlated signal is a phase-correlated signal determined based on a phase difference of the reflected sonar signal and the reference signal. As mentioned earlier, the MCU and DSP of the control unit 4 may be configured to process the received reflected signal 103. Stated differently, the control unit 4 is configured to the convert the reflected sonar signal 103 from an analog signal to a digital signal e.g. by means of an analog-to-digital (A/D) converter 105 as shown in Fig. 4. As an example to assist the reader, the sampled signal by the A/D 105 may look like a signal 501 as shown in Fig. 5a. Digital values after converter are offset 107 and normalized 109 to oscillate between -1 and 1. At that point a digital filter 111 is applied to the signal. The filter 111 can be a band pass filter or a low pass filter. By applying the digital filter 111, the noise components of the signal can be filtered out. Then processing path of the reflected signal 103 may split in two channels according to various embodiments. In the first channel an envelope detector 113 and a rectifier 119 are arranged and configured to extract the envelope 503 i.e. varying amplitudes of the digital signal during the duration of the signal as shown in Fig. 5c. The rectifier 119 is configured to rectify the signal 502 (i.e. negative values of the signal are turned to positive values) as shown in Fig. 5b. In the second channel, a POC correlator 115 is arranged and is configured to correlate the signal with the reference signal. The rectifier 117 is arranged to rectify the POC signal. By way of example, the POC signal 504 also referred to as processed signal 504 may look like the POC signal 504 in Fig. 5d, which is the POC signal of the signal 501 of Fig. 5a. The resulted POC signal 504 is a processed signal with clearly expressed peaks 504a-c. The peaks occur as the output of the autocorrelation function between the received reflected signal 501 and the reference signal moved across the received signal 501 match each other. The peaks can have maximum values of 1 as shown in Fig. 5d. It should be noted that the rectified POC signal 504 does not represent the amplitude 503 of the received reflected signal 501 and that the amplitude is extracted by the envelope detector 13 in the first channel.

In several aspects and embodiments, the method further comprises obtaining 309 at least one object-related information associated with the at least one first object 25a, 26a, 27 surrounded by the body of water based on the phase-correlated signal 504.

In several embodiments, the reflected sonar signal 103 may further comprise a reflection of the emitted sonar signal being incident on at least one second object 25b, 26b, 27 surrounded by the body of water. The method may thus further comprise obtaining 311 at least one object-related information associated with the at least one second object 25b, 26b, 27 surrounded by the body of water based on the phase-correlated signal 504. In the context of present disclosure, when the first and the second objects are the fish 25a, 25b, they refer to individual fish 25a, 25b which may be comprised and move underwater within a larger group of fish referred to as a school of fish 250. When the first and the second object may be the bed of the pool of water e.g. the bottom of the lake or the sea, 26a, 26b, then the first object 26a may refer to one part or portion or area of the bottom of the lake scanned by the sonar module 3 and the second object 26b may refer to another part or portion or area of the bottom of the lake which is different from the first part or portion or area 26a. When the first and the second objects may be vegetation 27, it is meant to be understood that different species and types of underwater vegetation may be scanned by the sonar module 3 and identified e.g. as the at least one first vegetation 27 and at least one second vegetation 27. As it should be cleared to the person skilled in the art, the selection of the first and second objects could be a combination of the above-mentioned objects. For instance, the first object may be fish 25a and the second object may be underwater vegetation 27. Thus, by the proposed method fish can be identified and localized with precision with respect to other underwater objects.

In several embodiments, the at least one object-related information associated with the at least one first 25a, 26a, 27 and/or second 25b, 26b, 27 objects may comprise at least one of a distance of the at least one first and/or second object from the fishing sonar module, a distance of the at least one first object from the at least one second object, and a hardness characteristics of the at least one first and/or second object. In other words, the method and the fishing sonar apparatus may be used to obtain the distance of an individual fish 25a from another individual fish 25b both being a part of a school of fish 250. The method may be applied to obtain the distance of the individual fish 25a from a vegetation 27 or from the bottom of the lake 26b. The relative distances between the first and the second objects can also be calculated and obtained based on the several embodiments of the methods herein.

In various aspects and embodiments, the obtaining 311 at least one object-related information associated with the at least one first object and/or at least one second object may further comprise determining 313 a time-of-flight of the phase-correlated reflected sonar signal 504 and calculating 315 a distance of the at least one first object 25a, 26a, 27 and/or the at least one second object 25b, 26b, 27 from the sonar module 3 based on the determined time-of-flight of the phase-correlated reflected sonar signal 504. Relative distances between the at least one first and second objects can also be readily calculated based on the relative times-of-flight of the phase-correlated reflected sonar signal 504.

In several aspects and embodiments, the obtaining 311 at least one object-related information associated with the at least one first object and/or at least one second object may further comprise extracting 317 the envelope 503 of the reflected sonar signal 501 as mentioned with reference to Figs. 5a-5c. Extracting the envelope of the reflected signal can be construed as extracting the envelope of the rectified reflected signal 502 as e.g. shown in Fig. 5b. In various aspects and embodiments, the method 300 may further comprise multiplying 319 the extracted envelope 503 of the reflected sonar signal 501 with the phase-correlated signal 504 as shown in Fig. 5e and with reference to the multiplier unit 121 of the block diagram of Fig. 4, thus generating a multiplied 123 POC signal 505 as shown in Fig. 5f. The multiplied POC signal 505 comprises sharp and distinctive signal peaks which have been adjusted to the amplitude component of the reflected sonar signal 502. Thus, by means of the advantageous method, narrow peaks are achieved which are indicative of noticeably improved identified separation between the underwater objects. Yet further, by means of generating the multiplied signal 505, the method 300 may further comprise determining 321 the hardness characteristics of the at least one first object and/or at least one second object based on the multiplied signal 505. Softer objects such as fish or vegetation reflect less energy than harder objects such as the bottom 26a, 26b of the sea, so the amplitude 503 of the received signal 501 defines the hardness attributes of the objects. Therefore, by aligning the detected peaks 504a-c of the POC signal 504, with the envelope 503 of the reflected signal 501, hardness characteristics of the underwater objects can be determined and thus types of objects such as fish can be identified.

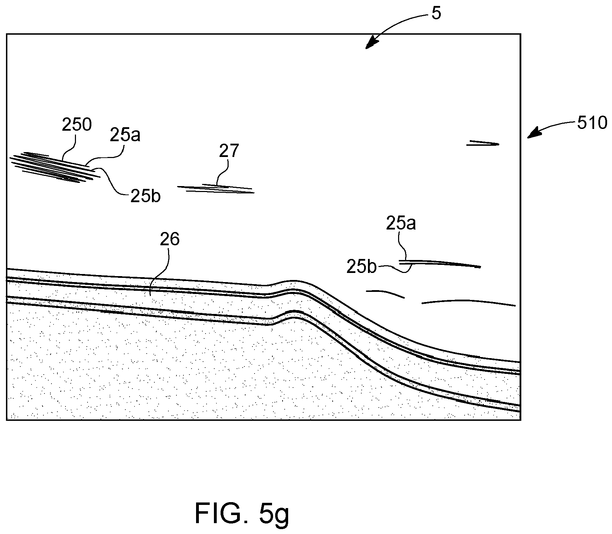

Fig. 5g shows an exemplary sonar image 510 generated by various embodiments of the method 300 of the present disclosure. Accordingly, various objects such as the bottom of the lake 26 or individual fish 25a, 25b can be identified and presented to the user of the fishing sonar apparatus. The created sonar images may be transmitted to a display comprised in the fishing sonar apparatus 2 of the vessel 1 or to a display of the wireless device 9, having graphical output means, wherein the user 91 can see the location and/or physical characteristics of fishes, the bed or bottom of the water pool, vegetation, etc. Providing such high-precision information regarding the underwater objects such as enhanced object-separation, range resolution and SNR by means of POC signal processing methods 300 of the present disclosure on a display device enables the user 91 to make informed decisions for planning and execution of fishing operations, thus making the process more cost-efficient and less labour-intensive.

Fig. 6 shows a schematic side view of a vessel 1 comprising a fishing sonar apparatus 2 for scanning a body of water by a fishing sonar module 3 comprised in the fishing sonar apparatus 2 of the vessel 1. The fishing sonar apparatus 2 comprises a control unit 4.

The fishing sonar apparatus 2 is configured to perform at least one sonar scan in the body of water 5 by means of the integrated sonar module 3 of the vessel 1. The fishing sonar apparatus 2 may cause the sonar module 3 to perform the at least one sonar scan by sending command signals to the sonar module 3. The sonar module 3 maybe integrated as a part of the fishing sonar apparatus 2 of the vessel or in some embodiments be a separate module connectable to the fishing sonar apparatus 2. Accordingly, the sonar module 3 can be a portable unit of different dimensions adaptable and arrangable to various types of vessels comprising the fishing sonar apparatus 2. The integration of the sonar module 3 into the fishing sonar apparatus 2 maybe performed at any stage of production of the vessels or by retrofitting of the sonar module 3 to existing vessels 1.

The sonar module 3 may comprise at least one sonar transducer element 31 for producing and receiving reflected the sonar signals. The sonar module 3 is configured to generate ultra-sound signals 101 to be emitted to the body of water and to receive reflected ultrasound signals 103 as they are reflected from obstacles, bed of the waterbody such as bottom 26a, 26b of sea or lake, objects such as fishes 25a, 25b or vegetation 27, etc. The sonar transducers could be arranged in the fishing sonar apparatus for side scanning i.e. a surface 51 of water and e.g. be rectangular lateral transducers and/or be circular bottom transducers arranged for 2D-scanning of depth of the water. The transducers may be made of piezoelectric ceramics. The rectangular ultrasonic transducers for side-scanning may be arranged to produce fan-shaped ultrasonic beams. The circular 2D-scan transducer or transducers may be arranged to produce conical ultrasonic beams toward the bed i.e. bottom of the waterbody, at least, for conventional 2D-scanning.

The command signals may be sent wirelessly or additionally or alternatively using a wired communication bus between the control unit 4 of fishing sonar apparatus 2 and the sonar module 3. In various embodiments, the command signals are sent to the sonar module 3 by the control unit 4 which may be an on-board control unit. The control unit 4 may additionally or alternatively be a distributed control unit such as a control unit implemented in a cloud network 20. The commands may be transmitted to the sonar module 3 by the user 91 of the fishing sonar apparatus 2 via the wireless device 9 using wireless communication links 10 or alternatively or additionally be transmitted partly by the on-board control unit 4 and partly by the wireless device 9 or any combination thereof.

The vessel 1 further comprises a perception system 8 and a localization system 7. A perception system 8 is in the present context to be understood as a system responsible for acquiring raw sensor data from sensors 8a, 8b such as cameras, RADARs, temperature sensors, water sensors, PH sensors, etc. and converting this raw data into scene understanding. This way, the control unit 4, may acquire further information regarding the temperature, salinity, PH, or other characteristics of the pool of water, hence providing a broader understanding of the underwater conditions. The perception system 8 may be further configured to obtain raw sonar scan data directly or via a dedicated sensor control circuitry 13 in the vessel 1 from the sonar module 3.

The localization system 7 is configured to monitor a geographical position and heading (compass orientation) of the vessel, and may be in the form of a Global Navigation Satellite System (GNSS), such as a GPS. However, the localization system may alternatively be realized as a Real Time Kinematics (RTK) GPS in order to improve accuracy. Moreover, in the present context the vessel 1 is assumed to have access to a digital map (e.g. a HD-map), either in the form of a locally stored digital map or via a remote data repository accessible via an external communication network 20 (e.g. as a data stream or a cloud network). In some embodiments, the access to the digital map may for example be provided by the localization system 7. The localization system may further comprise inertial measurement units (IMUs). An IMU may be understood as a device configured to detect linear acceleration using one or more accelerometers and rotational rate using one or more gyroscopes. Thus, in some embodiments the localization of the vessel's position or orientation may be based on motion sensor data e.g. data from accelerometers and gyroscopes, from the IMU alone or in combination with GNSS data. The control unit 4 of the fishing sonar apparatus 2 comprises one or more processors 11, a memory 12, a sensor interface 13 and a communication interface 14 as well as antenna elements 15. The processor(s) 11 may also be referred to as a control circuit 11 or control circuitry 11. The control circuit 11 is configured to execute instructions stored in the memory 12 or as provided by the user 91 of the fishing sonar apparatus 2 e.g. via a wireless device 9 to perform a method 300 according to any one of the embodiments disclosed herein. In more detail, the control circuitry 11 is configured to perform the method steps of Fig. 3. In several embodiments, the processing circuitry 11 further comprises, analog or digital signal processing units such as DSP units, MCUs, MCUs with embedded DSP, etc. The memory 12 of the control unit 4 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

Further, the vessel 1 may be connected to external network(s) 20 via for e.g. and instance 14 for a wireless link 10 (e.g. for retrieving map data). The same or some other wireless links 10 may be used to communicate with the external wireless device 9. Cellular communication technologies may be used for long range communication such as to external networks. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. Local communication within the vessel may also be of a wireless type with protocols such as WiFi, Bluetooth, or similar mid/short range technologies.

The vessel 1 may be a semi or fully autonomous vessel having the coordinates and location data of the areas to perform sonar scans stored in its memory 12 or receive such information by the localization system 7 and from the wireless device 9. The vessel 1 may carry passengers or can be an unmanned vessel. The vessel may be a remotely controlled vessel, wherein the instructions regarding steering and propelling the boat as well as instructions for performing the sonar scans are received via wireless communication between the vessel and the wireless device such as a user equipment (UE) 9. The wireless device 9 is operable to remotely control and steer the vessel, accordingly configured to transmit and receive wireless signals to and from the vessel. The UE 9 may be a mobile phone or a tablet capable of wireless communication e.g. equipped with WiFi transmitters and receivers and/or mobile communication such as 4G, LTE, 5G, 6G communication protocols and display means to present the sonar image information to the user. The vessel may transmit its current location as well as sonar data of its current position to the wireless device continuously or in predetermined periods of time or time intervals.

In various embodiments, the UE 9 may be configured to receive information concerning the body of water 5 and sonar data of the performed at least one sonar scans by the sonar device 3 of the vessel. Such information may be raw information retrieved from the sonar device or from the control unit 4. The information could also comprise analysed and processed data such as the converted and/or POC sonar signal 501, 504 by the control unit 4. The sonar data after processing can be used for purposes such as producing a map data of the area, identifying the characteristics of the area, identifying fish species having their habitats in the area, creating a map data of the water bottom and geological characteristics and variations thereof in the water bed used e.g. to determine probabilities of finding certain fish species.

The control unit may in various embodiments and aspects be configured to control the various operations of the vessel. The operations may in different embodiments include but not be limited to assuming control and steering the vessel freely or to a predetermined location based on GNSS coordinates. The operations could also comprise instructing the on-board integrated sonar module to perform sonar scans in various locations.

The present disclosure has been presented above with reference to specific embodiments. However, other embodiments than the above described are possible and within the scope of the disclosure. For instance, the advantageous method and fishing sonar apparatus have been explained with respect to a fishing sonar apparatus comprised in a vessel. However, various embodiments of the proposed method and the fishing sonar apparatus comprising all the features, elements and advantages may be readily implemented in other devices such as an independent fishing sonar device and/or portable and/or castable fishing sonar devices configured for scanning a body of water and localization of fish and underwater objects. For instance, the fishing sonar apparatus may be comprised in a castable enclosure. Thus, the fishing sonar apparatus for scanning a body of water can be implemented in the castable enclosure which may include a housing having buoyant components. The castable fishing sonar device may also include suitable wireless communication interfaces, perception systems, localization systems, processing circuitry etc., similar to what was explained earlier with respect to such systems in the embodiments including a vessel, comprised in the fishing sonar apparatus or implemented as separate units in the castable fishing sonar device. The castable sonar device can be casted into the body of water. The fishing sonar apparatus comprised in the castable enclosure may comprise a control unit configured to emit, by means of a sonar module comprised in the fishing sonar apparatus, a phase-modulated impulse sonar signal having a first frequency into the body of water. The control unit may be further configured to receive a reflected phase-modulated impulse sonar signal from the body of water, wherein the received reflected sonar signal may comprise a reflection of the emitted sonar signal being incident on at least one first object surrounded by the body of water. The control unit may be further configured to determine a correlated signal between the reflected phase-modulated impulse sonar signal and a reference signal at least partly constructed based on the reflected phase-modulated impulse sonar signal, wherein the correlated signal may be a phase-correlated signal determined based on a phase difference of the reflected sonar signal and the reference signal. The control unit may be further configured to obtain at least one object-related information associated with the at least one first object surrounded by the body of water based on the phase-correlated signal. The control unit of the fishing sonar apparatus may comprise one or more processors or control circuitry, a memory, a sensor interface and a communication interface as well as antenna elements. The control circuitry may be configured to execute instructions stored in the memory or as provided by the user of the fishing sonar apparatus e.g. via a wireless device to perform a method according to any one of the embodiments disclosed herein.

Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of an on-board control unit, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible or computer-readable medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) (associated with the control unit) may be or include any number of hardware components for conducting data or signal processing or for executing computer code stored in memory. The control unit may comprise an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the fishing sonar apparatus and methods of this description. According to an exemplary embodiment the memory is communicably connected to the processor 11 (e.g., via a circuit or any other wired, wireless, or network connection) and includes computer code for executing one or more processes described herein.

As used herein, the term "if" may be construed to mean "when or "upon" or "in response to determining or "in response to detecting." depending on the context. The term "obtaining" is herein to be interpreted broadly and encompasses receiving, retrieving, collecting, acquiring, and so forth.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the disclosure may be at least in part implemented by means of both hardware and software, and that several "means" or "units" may be represented by the same item of hardware.

**Claims**

1. A fishing sonar apparatus for scanning a body of water, wherein the fishing sonar apparatus comprises a control unit configured to:

- emit, by means of a fishing sonar module comprised in the fishing sonar apparatus, a phase-modulated impulse sonar signal having a first frequency into the body of water;
- receive a reflected phase-modulated impulse sonar signal from the body of water, wherein said received reflected sonar signal comprises a reflection of the emitted sonar signal being incident on at least one first object surrounded by the body of water; and
- determine a correlated signal between the reflected phase-modulated impulse sonar signal and a reference signal at least partly constructed based on the reflected phase-modulated impulse sonar signal, wherein said correlated signal is a phase-correlated signal determined based on a phase difference of the reflected sonar signal and the reference signal; and
- obtain at least one object-related information associated with the at least one first object surrounded by the body of water based on said phase-correlated signal.

2. The fishing sonar apparatus according to claim 1, wherein said received reflected sonar signal further comprises a reflection of the emitted sonar signal being incident on at least one second object surrounded by the body of water; and wherein the control unit is further configured to:

- obtain at least one object-related information associated with the at least one second object surrounded by the body of water based on said phase-correlated signal.

3. The fishing sonar apparatus according to any one of claims 1 or 2, wherein the control unit is further configured to:

- determine a time-of-flight of the phase-correlated reflected sonar signal; and
- calculate a distance of the at least one first object and/or the at least one second object from the sonar module based on the determined time-of-flight of the reflected sonar signal.

4. The fishing sonar apparatus according to any one of claims 1 - 3, wherein the control unit is further configured to:

- extract an envelope of the reflected sonar signal;
- multiply the extracted envelope of the reflected sonar signal with the phase-correlated signal; and
- determine the hardness characteristics of the at least one first object and/or at least one second object based on the multiplied signal.

5. The fishing sonar apparatus according to any one of claims 1 - 4, wherein the fishing sonar apparatus is comprised in a vessel or in a castable enclosure.

6. A method performed by a fishing sonar apparatus for scanning a body of water, the method comprising:

- emitting, by means of a fishing sonar module comprised in the fishing sonar apparatus, a phase-modulated impulse sonar signal having a first frequency into the body of water;
- receiving a reflected phase-modulated impulse sonar signal from the body of water; wherein said received reflected sonar signal comprises a reflection of the emitted sonar signal being incident on at least one first object surrounded by the body of water; and
- determining a correlated signal between the reflected phase-modulated impulse sonar signal and a reference signal at least partly constructed based on the reflected phase-modulated impulse sonar signal, wherein said correlated signal is a phase-correlated signal determined based on a phase difference of the reflected sonar signal and the reference signal; and
- obtaining at least one object-related information associated with the at least one first object surrounded by the body of water based on said phase-correlated signal.

7. The method according to claim 6, wherein the phase-correlated signal is a phase-only correlated, POC, signal.

8. The method according to any of claims 6 or 7, wherein said received reflected sonar signal further comprises a reflection of the emitted sonar signal being incident on at least one second object surrounded by the body of water; and wherein the method further comprises:

- obtaining at least one object-related information associated with the at least one second object surrounded by the body of water based on said phase-correlated signal.

9. The method according to any one of claims 6 - 8, wherein the at least one object-related information associated with the at least one first and/or second objects comprises at least one of a distance of the at least one first and/or second object from the fishing sonar module, a distance of the at least one first object from the at least one second object, and a hardness characteristics of the at least one first and/or second object.

10. The method according to any one of claims 6 - 9, wherein the obtaining at least one object-related information associated with the at least one first object and/or at least one second object further comprises:

- determining a time-of-flight of the phase-correlated reflected sonar signal; and
- calculating a distance of the at least one first object and/or the at least one second object from the sonar module based on the determined time-of-flight of the phase-correlated reflected sonar signal.

**11.** The method according to any one of claims 6 - 10, wherein the obtaining at least one object-related information associated with the at least one first object and/or at least one second object further comprises:

- extracting an envelope of the reflected sonar signal;
- multiplying the extracted envelope of the reflected sonar signal with the phase-correlated signal; and
- determining the hardness characteristics of the at least one first object and/or at least one second object based on the multiplied signal.

**12.** The method according to any one of claims 6 - 11, wherein the reference signal is at least one of a predetermined reference signal, a reference signal constructed based on a reflected phase-modulated impulse sonar signal generated under a test operation condition of the fishing sonar module in a test chamber, and a reference signal constructed based on a reflected phase-modulated impulse sonar signal generated under real-life operation condition of the fishing sonar module.

**13.** A computer program carrier carrying one or more computer programs configured to be executed by one or more processors of a processing system comprised in a control unit, the one or more programs comprising instructions for performing the method according to any one of claims 6 - 12, and wherein the computer program carrier is one of an electronic signal, optical signal, radio signal or a computer-readable storage medium.

**14.** A computer program product comprising instructions which, when the program is executed by one or more processors of a processing system comprised in a control unit, causes the processing system to carry out the method according to any one of claims 6 -12.

**15.** A vessel for scanning a body of water, the vessel comprising:

a perception system for monitoring a surrounding environment of the vessel such as the body of water;

a localization system configured to monitor a geographical position and heading of the vessel; and

a fishing sonar apparatus according to any one of claims 1 - 4.

FIG. 1

FIG. 2

301 — Emit a sonar signal

300

303 — Receive a reflected signal

305 — Determine if reflected signal comprises reflection of underwater objects

307 — Determine a phase-correlated signal

311

Obtain at least one object-related information of at least one first object

Obtain at least one object-related information of at least one second object

Determine a time-of-flight of phase-correlated reflected signal

313

Calculate a distance of first and/or second object — 315

Extract envelope of reflected signal — 317

Multiply extracted envelope with phase-correlated signal — 319

Determine hardness characteristics — 321

309

## FIG. 3

FIG. 4

FIG. 5a

FIG. 5b

FIG. 5c

FIG. 5d

FIG. 5e

FIG. 5f

FIG. 5g

FIG. 6

Europäisches
Patentamt

European
Patent Office

Office européen
des brevets

# EUROPEAN SEARCH REPORT

Application Number

EP 21 21 8355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H01 257288 A (JAPAN RADIO CO LTD) 13 October 1989 (1989-10-13) | 1,2,5-8, 12-15 | INV. G01S15/96 |
| Y | * page 572, right-hand column, paragraph disclosure of invention – page 574 * <br> * claim 1 * <br> * figures 1-2 * <br> * abstract * | 3,4,9-11 | A01K97/00 <br> A01K97/02 <br> G01S15/36 |
| Y | US 2019/072951 A1 (CLARK JEREMIAH [US] ET AL) 7 March 2019 (2019-03-07) <br> * paragraphs [0005] – [0018], [0056] – [0059], [0068] – [0078], [0092] – [0102], [0113] – [0115], [0127] – [0132] * <br> * paragraphs [0137] – [0149], [0151] – [0154], [0170], [0172] – [0177], [0196] – [0199] * <br> * figures 1-17 * | 3,4,9-11 | |
| A | JP 2006 340284 A (NIPPON TELEGRAPH & TELEPHONE) 14 December 2006 (2006-12-14) <br> * paragraphs [0002] – [0004], [0014], [0025] – [0031], [0038] – [0039] * <br> * figures 1, 3a,3c * | 1-15 | TECHNICAL FIELDS SEARCHED (IPC) <br> G01S <br> A01K |

The present search report has been drawn up for all claims

| Place of search | Date of completion of the search | Examiner |
|---|---|---|
| The Hague | 29 June 2022 | Been, Mathieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 8355

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2022

| Patent document cited in search report | | Publication date | Patent family member(s) | | Publication date |
|---|---|---|---|---|---|
| JP H01257288 | A | 13-10-1989 | NONE | | |
| US 2019072951 | A1 | 07-03-2019 | US | 2019072951 A1 | 07-03-2019 |
| | | | US | 2020341463 A1 | 29-10-2020 |
| JP 2006340284 | A | 14-12-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170023676 A1